(19) Europäisches Patentamt / European Patent Office / Office européen des brevets

(11) **EP 4 246 634 A1**

(12) **EUROPEAN PATENT APPLICATION**
published in accordance with Art. 153(4) EPC

(43) Date of publication:
**20.09.2023 Bulletin 2023/38**

(21) Application number: **21892247.4**

(22) Date of filing: **05.11.2021**

(51) International Patent Classification (IPC):
$H01M\ 8/1051^{(2016.01)}$   $H01M\ 8/1058^{(2016.01)}$
$H01M\ 8/1081^{(2016.01)}$   $H01M\ 8/18^{(2006.01)}$
$H01M\ 8/1018^{(2016.01)}$

(52) Cooperative Patent Classification (CPC):
H01M 8/1018; H01M 8/1023; H01M 8/1027;
H01M 8/1039; H01M 8/1051; H01M 8/1058;
H01M 8/106; H01M 8/1081; H01M 8/18;
H01M 2300/0082; Y02E 60/50; Y02P 70/50

(86) International application number:
**PCT/KR2021/015985**

(87) International publication number:
**WO 2022/103079 (19.05.2022 Gazette 2022/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.11.2020  KR 20200150624**

(71) Applicant: **Kolon Industries, Inc.
Seoul 07793 (KR)**

(72) Inventors:
• **PARK, Junghwa
Seoul 07793 (KR)**
• **LEE, Dong-Hoon
Seoul 07793 (KR)**
• **KIM, Nayoung
Seoul 07793 (KR)**
• **LEE, Eunsu
Seoul 07793 (KR)**
• **OH, Changhoon
Seoul 07793 (KR)**
• **LEE, Hyesong
Seoul 07793 (KR)**

(74) Representative: **Ter Meer Steinmeister & Partner
Patentanwälte mbB
Nymphenburger Straße 4
80335 München (DE)**

(54) **POLYMER ELECTROLYTE MEMBRANE, MANUFACTURING METHOD THEREFOR, AND ELECTROCHEMICAL DEVICE COMPRISING SAME**

(57)   Disclosed are a polymer electrolyte membrane having both high ion conductivity and excellent chemical durability, a manufacturing method therefor, and an electrochemical device comprising same. The polymer electrolyte membrane of the present invention comprises an electrolyte composition, the electrolyte composition containing: an ion conductor; and a radical scavenger, wherein the radical scavenger comprises an organic cyclic compound having at least one functional group selected from the group consisting of a hydroxyl group (-OH), an amine group ($-NH_2$), a carboxyl group (-COOH), and an amide group ($-CONH_2$).

EP 4 246 634 A1

## Description

[Technical Field]

The present disclosure relates to a polymer electrolyte membrane, a method for manufacturing the same, and an electrochemical device including the same, and more particularly to a polymer electrolyte membrane that exhibits both high ionic conductivity and excellent chemical durability, a method for manufacturing the same, and an electrochemical device including the same.

[Background Art]

In this specification, the term "electrochemical device" is a concept that encompasses both a power generating device (e.g. a fuel cell) and an energy saving device (e.g. a redox flow battery (RFB)).

A fuel cell, which combines hydrogen and oxygen with each other to generate electricity, has advantages in that it is possible to continuously generate electricity as long as hydrogen and oxygen are supplied and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

A stack of the fuel cell, which substantially generates electricity, has a structure in which several to several tens of unit cells, each of which includes a membrane-electrode assembly (MEA) and a separator (also referred to as a bipolar plate), are stacked. The membrane-electrode assembly generally includes an anode, a cathode, and an electrolyte membrane disposed therebetween.

The fuel cell may be classified as an alkaline electrolyte membrane fuel cell or a polymer electrolyte membrane fuel cell (PEMFC) depending on the state and kind of an electrolyte, and the polymer electrolyte membrane fuel cell has attracted attention as a mobile power supply, a power supply for vehicles, and a power supply for home use due to a low operating temperature of less than 100°C, rapid starting and response characteristics, and excellent durability thereof.

Representative examples of the polymer electrolyte membrane fuel cell may include a proton exchange membrane fuel cell (PEMFC), which uses hydrogen gas as fuel, and a direct methanol fuel cell (DMFC), which uses liquid methanol as fuel.

The reaction that occurs in the polymer electrolyte membrane fuel cell will be described in brief.

First, when fuel such as hydrogen gas is supplied to the anode, hydrogen ions ($H^+$) and electrons ($e^-$) are generated at the anode as the result of the oxidation reaction of hydrogen. The generated hydrogen ions are transferred to the cathode via a polymer electrolyte membrane, and the generated electrons are transferred to the cathode via an external circuit. Oxygen supplied to the cathode is combined with the hydrogen ions and the electrons, and water is generated as the result of the reduction reaction of the oxygen.

The membrane-electrode assembly, particularly the polymer electrolyte membrane, greatly affects performance and lifespan of the fuel cell. In order to improve performance and lifespan of the fuel cell, therefore, it is very important to prevent degradation of the polymer electrolyte membrane due to operation of the fuel cell.

A radical generated when the fuel cell is driven is known as a main cause of degradation of the polymer electrolyte membrane. For example, hydrogen peroxide ($H_2O_2$) may be generated during the reduction reaction of the oxygen at the cathode, and a hydroperoxyl radical and/or a hydroxyl radical may be generated from the hydrogen peroxide. In addition, when an oxygen molecule in air that is supplied to the cathode reaches the anode through the polymer electrolyte membrane, hydrogen peroxide may also be generated at the anode, whereby a hydroperoxyl radical and/or a hydroxyl radical may be generated. The radicals deteriorate an ion conductor (e.g. a fluorine-based/hydrocarbon-based polymer including a sulfonic acid group) included in the polymer electrolyte membrane, whereby ionic conductivity of the polymer electrolyte membrane is reduced.

The redox flow battery (RFB) is a kind of secondary battery that can be used for a long time as the result of repeated charging and discharging according to a reversible electrochemical reaction of an electrolyte.

The redox flow battery (RFB) generally includes two kinds of liquid electrolytes isolated from each other by the polymer electrolyte membrane. A radical material included in the liquid electrolytes (particularly, the liquid electrolyte at the cathode (catholyte)) degrades the ion conductor included in the polymer electrolyte membrane, whereby ionic conductivity of the polymer electrolyte membrane is reduced.

In order to prevent degradation of the polymer electrolyte membrane due to the radicals, introduction of radical scavengers capable of removing the radicals has been proposed.

However, radical scavengers proposed up to date have limitations in that it is possible to remove generated radicals but not to prevent generation of radicals. Furthermore, a conventional metal-based radical scavenger has problems in that the radical scavenger reduces ionic conductivity of the polymer electrolyte membrane, whereby performance of the fuel cell is reduced, and the radical scavenger is eluted and/or agglomerated during operation of the cell.

[Disclosure]

[Technical Problem]

Therefore, the present disclosure relates to a polymer electrolyte membrane capable of preventing problems caused by limitations and shortcomings of the related art described above, a method for manufacturing the same, and an electrochemical device including the same.

It is an object of the present disclosure to provide a polymer electrolyte membrane that exhibits both high ionic conductivity and excellent chemical durability.

It is another object of the present disclosure to provide a method for manufacturing a polymer electrolyte membrane that exhibits both high ionic conductivity and excellent chemical durability.

It is a further object of the present disclosure to provide an electrochemical device capable of maintaining excellent performance for a long time.

In addition to the above objects of the present disclosure, other features and advantages of the present disclosure will be described hereinafter or will be clearly understood by those skilled in the art to which the present disclosure pertains from the following description thereof.

[Technical Solution]

In accordance with an aspect of the present disclosure, there is provided a polymer electrolyte membrane including an electrolyte composition, wherein the electrolyte composition includes an ion conductor and a radical scavenger, and wherein the radical scavenger includes an organic cyclic compound having at least one functional group selected from the group consisting of a hydroxyl group (-OH), an amine group ($-NH_2$), a carboxyl group (-COOH), and an amide group ($-CONH_2$).

The organic cyclic compound may be a heterocyclic compound including nitrogen as a heteroelement.

The radical scavenger may include substituted or unsubstituted nicotinic acid or substituted or unsubstituted nicotinamide.

The radical scavenger may include at least one organic cyclic compound selected from the group consisting of substituted or unsubstituted nicotinic acid, substituted or unsubstituted nicotinamide, substituted or unsubstituted ibuprofen, and substituted or unsubstituted biotin.

The organic cyclic compound may be included in the polymer electrolyte membrane in an amount of 0.1 to 10 parts by weight based on 100 parts by weight of the ion conductor.

The ion conductor may have at least one ion exchange group selected from the group consisting of a sulfonic acid group, a carboxyl group, a boronic acid group, a phosphoric acid group, an imide group, a sulfone imide group, a sulfone amide group, and a sulfonic acid fluoride group.

The ion conductor may be a fluorine-based ion conductor or a hydrocarbon-based ion conductor.

The polymer electrolyte membrane may further include a porous support having a plurality of pores, and the pores may be filled with the electrolyte composition.

The porous support may be an expanded film or a nonwoven fibrous web.

The ratio of the apparent volume of the porous support to the total volume of the polymer electrolyte membrane may be 5 to 90%.

In accordance with another aspect of the present disclosure, there is provided a method for manufacturing a polymer electrolyte membrane, the method including preparing a mixed solution including an ion conductor and a radical scavenger and forming a polymer electrolyte membrane using the mixed solution, wherein the radical scavenger includes an organic cyclic compound having at least one functional group selected from the group consisting of a hydroxyl group (-OH), an amine group ($-NH_2$), a carboxyl group (-COOH), and an amide group ($-CONH_2$).

The preparing the mixed solution may include preparing a dispersion having the ion conductor dispersed therein and dissolving the radical scavenger in the dispersion.

The ion conductor may be a fluorine-based ion conductor.

Alternatively, the preparing the mixed solution may include dissolving the radical scavenger in a solvent to obtain a first solution and dissolving the ion conductor in the first solution to obtain a second solution.

The ion conductor may be a hydrocarbon-based ion conductor.

The organic cyclic compound may be a heterocyclic compound including nitrogen as a heteroelement.

The radical scavenger may include substituted or unsubstituted nicotinic acid or substituted or unsubstituted nicotinamide.

The radical scavenger may include at least one organic cyclic compound selected from the group consisting of substituted or unsubstituted nicotinic acid, substituted or unsubstituted nicotinamide, substituted or unsubstituted ibuprofen, and substituted or unsubstituted biotin.

The organic cyclic compound may be included in the mixed solution in an amount of 0.1 to 10 parts by weight based on 100 parts by weight of the ion conductor.

The polymer electrolyte membrane formation step using the mixed solution may include preparing a porous support, impregnating the porous support with the mixed solution, and drying the porous support impregnated with the mixed solution.

In accordance with a further aspect of the present disclosure, there is provided an electrochemical device including an anode, a cathode, and the polymer electrolyte membrane disposed between the anode and the cathode.

The general description of the present disclosure given above is provided merely to illustrate or describe the present disclosure, and does not limit the scope of rights of the present disclosure.

[Advantageous Effects]

According to the present disclosure, an organic radical scavenger is included in a polymer electrolyte membrane instead of a metal-based radical scavenger, whereby it is possible to improve chemical durability of the polymer electrolyte membrane without reduction in ionic conductivity encountered when the metal-based radical scavenger is used. Consequently, an electrochemical device manufactured using a polymer electrolyte membrane according to the present disclosure is capable of maintaining excellent performance for a long time.

[Best Mode]

Hereinafter, embodiments of the present disclosure will be described in detail. However, the following embodiments are illustratively provided merely for clear understanding of the present disclosure and do not limit the scope of the present disclosure.

A polymer electrolyte membrane according to the present disclosure includes an electrolyte composition.

The electrolyte composition includes an ion conductor and a radical scavenger.

The radical scavenger according to the present disclosure, which is a material capable of removing a radical (e.g. a hydroperoxyl radical or a hydroxyl radical) that degrades a polymer electrolyte membrane, thereby reducing ionic conductivity thereof, and inhibiting generation of such a radical, includes an organic cyclic compound having at least one functional group selected from the group consisting of a hydroxyl group (-OH), an amine group ($-NH_2$), a carboxyl group (-COOH), and an amide group ($-CONH_2$).

The organic cyclic compound may be an aromatic compound having the above-mentioned functional group or an alicyclic compound having the above-mentioned functional group. For example, the organic cyclic compound having the above-mentioned functional group may be nicotinic acid, nicotinamide, ibuprofen, biotin, ascorbic acid, or chitosan.

In addition, the organic cyclic compound may be a heterocyclic compound having the above-mentioned functional group or a homocyclic compound having the above-mentioned functional group.

For example, the organic cyclic compound may be a heterocyclic compound including nitrogen as a heteroelement. More specifically, the radical scavenger may include substituted or unsubstituted nicotinic acid or substituted or unsubstituted nicotinamide.

Alternatively, the radical scavenger may include substituted or unsubstituted ibuprofen or substituted or unsubstituted biotin.

Optionally, the radical scavenger according to the present disclosure may include two or more of the above-mentioned organic cyclic compounds.

As previously described, the conventional metal-based radical scavenger has limitations in that it is possible to remove a generated radical but not to prevent generation of a radical. In contrast, the radical scavenger including the above organic cyclic compound according to the present disclosure is capable of not only reacting with a radical to remove the radical but also separating oxygen from hydrogen peroxide to change the hydrogen peroxide into water, thereby removing the hydrogen peroxide, which is a source of the radical. That is, the organic radical scavenger according to the present disclosure is capable of not only removing a generated radical but also inhibiting generation of radicals.

In addition, the conventional metal-based radical scavenger reduces ionic conductivity of a polymer electrolyte membrane, thereby reducing performance of a fuel cell, whereas the organic radical scavenger according to the present disclosure is capable of improving chemical durability of a polymer electrolyte membrane while not reducing ionic conductivity of the polymer electrolyte membrane.

In addition, the radical scavenger according to the present disclosure has advantages in that, since the radical scavenger exhibits high heat resistance, the radical scavenger is not degraded during manufacture of a polymer electrolyte membrane, and in that a problem of performance reduction or elution due to long-term operation of a fuel cell does not occur.

In an embodiment of the present disclosure, the organic cyclic compound may be included in the polymer electrolyte membrane in an amount of 0.1 to 10 parts by weight, more preferably 0.3 to 7 parts by weight, even more preferably 0.5 to 5 parts by weight, based on 100 parts by weight of the ion conductor. If the content of the organic cyclic compound is less than 0.1 parts by weight, chemical durability of the polymer electrolyte membrane is not satisfied. If the content of the organic cyclic compound exceeds 10 parts by weight, on the other hand, ionic conductivity of the polymer electrolyte membrane is reduced.

The ion conductor according to the present disclosure includes an ion exchange group. The ion exchange group may be at least one proton exchange group selected from the group consisting of a sulfonic acid group, a carboxyl group, a boronic acid group, a phosphoric acid group, an imide group, a sulfone imide group, a sulfone amide group, and a sulfonic acid fluoride group. Specifically, an ion conductor according to an embodiment of the present disclosure may be a proton conductor having a sulfonic acid group and/or a carboxyl group as a proton exchange group.

In addition, the ion conductor may be a fluorine-based ion conductor, a hydrocarbon-based ion conductor, or a mixture thereof.

The fluorine-based ion conductor may be a fluorine-based polymer having the proton exchange group at a side chain thereof and containing fluorine at a main chain thereof (e.g. poly(perfluorosulfonic acid) or poly(perfluorocarboxylic acid)).

The hydrocarbon-based ion conductor may be a hydrocarbon-based polymer having the proton exchange group at a side chain thereof (e.g. sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, or sulfonated polyarylene ether sulfone ketone).

The polymer electrolyte membrane according to the present disclosure may be (i) a single membrane formed of the electrolyte composition or (ii) a reinforced composite membrane having pores of a porous support filled with the electrolyte composition.

That is, a reinforced composite membrane type polymer electrolyte membrane according to an embodiment of the present disclosure may further include a porous support having a plurality of pores filled with the electrolyte composition.

In an embodiment of the present disclosure, the porous support may be an expanded film or a nonwoven fibrous web.

The ratio of the apparent volume of the porous support to the total volume of the polymer electrolyte membrane may be 5 to 90%.

If the ratio is less than 5%, the effects of improving dimensional stability and mechanical durability due to selection of the porous support are insignificant. If the ratio exceeds 90%, on the other hand, the thickness of an ion conductor layer (i.e. a layer composed of only the electrolyte composition according to the present disclosure) located on an upper surface or a lower surface of the porous support is too small, whereby surface resistance is increased. For the above-mentioned reasons, it is more preferable for the ratio of the apparent volume of the porous support to the total volume of the polymer electrolyte membrane to be 30 to 60%.

For a reason similar thereto, the ratio of the thickness of the porous support to the total thickness of the polymer electrolyte membrane may be 5 to 90%, more preferably 30 to 60%.

A porous support according to an embodiment of the present disclosure may have a thickness of 1 to 50 $\mu$m.

If the thickness of the porous support is less than 1 $\mu$m, mechanical strength of the polymer electrolyte membrane may be reduced. If the thickness of the porous support exceeds 50 $\mu$m, on the other hand, resistance loss may be increased and weight reduction and integration may not be satisfactorily achieved. For the above-mentioned reasons, the porous support preferably has a thickness of 2 to 40 $\mu$m, more preferably 3 to 30 $\mu$m, even more preferably 3 to 20 $\mu$m.

The porous support may include several sub-porous supports. Even in this case, the thickness of the porous support (the total thicknesses of the sub-porous supports) may be 1 to 50 $\mu$m, preferably 2 to 40 $\mu$m, more preferably 3 to 30 $\mu$m, even more preferably 3 to 20 $\mu$m.

The porosity of the porous support may be 45 to 90%, specifically 60 to 90%. If the porosity of the porous support is less than 45%, the amount of the ion conductor in the porous support is excessively small, whereby resistance of the polymer electrolyte membrane is increased and ionic conductivity of the polymer electrolyte membrane is reduced. If the porosity of the porous support exceeds 90%, shape stability may be reduced, whereby a back-end process may not be smoothly performed.

The porosity means the ratio of the volume of air in the porous support to the total volume of the porous support. The total volume of the porous support may be obtained by measuring the width, the depth, and the thickness of a cuboid sample and multiplying the same, and the volume of air in the porous support may be obtained by subtracting the volume of the porous support material obtained by dividing the mass of the sample by the density of the porous support material from the total volume of the porous support.

Hereinafter, a method for manufacturing a polymer electrolyte membrane according to embodiments of the present disclosure will be described in detail.

The polymer electrolyte membrane manufacturing method according to the present disclosure includes a step of preparing a mixed solution including an ion conductor and a radical scavenger and a step of forming a polymer electrolyte membrane using the mixed solution.

As previously described, the radical scavenger includes an organic cyclic compound having at least one functional group selected from the group consisting of a hydroxyl group (-OH), an amine group ($-NH_2$), a carboxyl group (-COOH), and an amide group ($-CONH_2$).

Since the ion conductor and the radical scavenger were described in detail above, a repetitive description thereof will be omitted.

The mixed solution may be prepared by (i) dissolving the radical scavenger in a solution or dispersion of the ion conductor, (ii) dissolving or dispersing the ion conductor in a solution of the radical scavenger, or (iii) mixing a solution or dispersion of the ion conductor and a solution of the radical scavenger with each other.

In an embodiment of the present invention, the mixed solution may be prepared by dissolving the radical scavenger in a dispersion of the ion conductor. That is, the step of preparing a mixed solution may include a step of preparing a solution/dispersion having the ion conductor dissolved/dispersed therein and a step of dissolving the radical scavenger in the solution/dispersion.

The solution/dispersion of the ion conductor may be obtained by dissolving/dispersing the ion conductor in a first solvent; however, the solution/dispersion of the ion conductor may be directly purchased commercially depending on circumstances. For example, a fluorine-based ion conductor solution/dispersion, such as Nafion® solution/dispersion, is commercially sold.

Alternatively, the mixed solution may be prepared by dissolving or dispersing the ion conductor in a solution having the radical scavenger dissolved therein. That is, the step of preparing a mixed solution may include a step of dissolving the radical scavenger in a second solvent to manufacture a first solution and a step of dissolving or dispersing the ion conductor in the first solution to manufacture a second solution. In this embodiment, the ion conductor may be a fluorine-based ion conductor or a hydrocarbon-based ion conductor, more specifically a hydrocarbon-based ion conductor having high solubility in first and second solvents, a description of which will follow.

Each of the first and second solvents may be water, a hydrophilic solvent, an organic solvent, or a mixture of two or more thereof, and the first and second solvents may be identical to or different from each other.

The hydrophilic solvent may include a linear or branched, saturated or unsaturated hydrocarbon having a carbon number of 1 to 12 as a main chain and may have one or more functional groups selected from the group consisting of alcohol, isopropyl alcohol, ketone, aldehyde, carbonate, carboxylate, carboxylic acid, ether, and amide, and each thereof may include an aromatic compound or an alicyclic compound as at least a part of the main chain.

The organic solvent may be N-methyl pyrrolidone (NMP), dimethylformamide (DMF), dimethyl sulfoxide (DMSO), tetrahydrofuran (THF), dimethylacetamide (DMAc), or a mixture of two or more thereof; however, the present disclosure is not limited thereto.

The radical scavenger (i.e. the organic cyclic compound according to the present disclosure) may be included in the mixed solution in an amount of 0.1 to 10 parts by weight, more preferably 0.3 to 7 parts by weight, even more preferably 0.5 to 5 parts by weight, based on 100 parts by weight of the ion conductor.

Since the polymer electrolyte membrane according to the present disclosure includes the above-mentioned organic radical scavenger instead of the metal-based radical scavenger, as previously described, it is possible to improve chemical durability of the polymer electrolyte membrane while not reducing ionic conductivity thereof. Consequently, the polymer electrolyte membrane according to the present disclosure does not include the metal-based radical scavenger (e.g. at least one transition metal selected from the group consisting of Ce, Ni, W, Co, Cr, Zr, Y, Mn, Fe, Ti, V, Mo, La, and Nd; at least one precious metal selected from the group consisting of Au, Pt, Ru, Pd, and Rh; an ion of the transition metal or the precious metal; a salt of the transition metal or the precious metal; and/or an oxide of the transition metal or the precious metal).

As previously described, the polymer electrolyte membrane according to the present disclosure may be (i) a single membrane formed of the electrolyte composition or (ii) a reinforced composite membrane having pores of a porous support filled with the electrolyte composition.

In order to manufacture a reinforced composite membrane type polymer electrolyte membrane, the step of forming a polymer electrolyte membrane using the mixed solution may include a step of preparing a porous support, a step of impregnating the porous support with the mixed solution, and a step of drying the porous support impregnated with the mixed solution.

As previously described, the porous support may be an expanded film or a nonwoven fibrous web.

The expanded film may be manufactured, for example, by shaping a support-forming liquid including a fluorine-based polymer (e.g. polytetrafluoroethylene (PTFE)) into a film shape and forming a plurality of pores in the film by expansion.

The nonwoven fibrous web may be formed of a support-forming liquid including a hydrocarbon-based polymer, such as polyolefin (e.g. polyethylene, polypropylene, or polybutylene), polyester (e.g. PET or PBT), polyamide (e.g. nylon-6, nylon-6,6, or aramid), polyamic acid (which is shaped into a web and is then transformed into polyimide through imidization), polyurethane, polybutene, poly lactic acid, polyvinyl alcohol, polyphenylene sulfide (PPS), polysulfone, a fluid crystalline polymer, polyethylene-co-vinyl acetate, polyacrylonitrile, cyclic polyolefin, polyoxymethylene, or a polyolefin-based thermoplastic elastomer.

The nonwoven fibrous web may be manufactured using a method, such as wet laying, electrospinning, carding, garneting, air laying, melt blowing, spunbonding, stitch bonding.

Subsequently, the porous support thus manufactured is impregnated with the mixed solution. The impregnation step may be performed by (i) casting the mixed solution onto a substrate and adding the porous support onto the cast mixed solution or (ii) coating the porous support with the mixed solution. The coating may be, for example, bar coating, comma coating, slot die coating, screen printing, spray coating, or doctor blade coating.

Subsequently, in order to remove a solvent/dispersion medium from the mixed solution, the porous support impregnated with the mixed solution is dried.

Hereinafter, an electrochemical device according to the present disclosure will be described in detail.

The electrochemical device according to the present disclosure includes an anode, a cathode, and the above-described polymer electrolyte membrane according to the present disclosure disposed therebetween.

When the electrochemical device is a fuel cell, the oxidation reaction of hydrogen occurs at the anode, to which hydrogen gas is supplied, whereby hydrogen ions ($H^+$) and electrons ($e^-$) are generated. The generated hydrogen ions are transferred to the cathode via the polymer electrolyte membrane, and the generated electrons are transferred to the cathode via an external circuit.

At the cathode, to which oxygen gas is supplied, oxygen is combined with the hydrogen ions and the electrons, and water is generated as the result of the reduction reaction of the oxygen.

The anode and the cathode of the electrochemical device according to the present disclosure are not particularly restricted. For example, when the electrochemical device is a fuel cell, an anode and a cathode of an ordinary membrane-electrode assembly for fuel cells may be used in the present disclosure.

Hereinafter, the present disclosure will be described in detail with reference to concrete examples. However, the following examples are given merely to assist in understanding of the present disclosure, and do not limit the scope of rights of the present disclosure.

Example 1

A mixed solution was manufactured by dissolving nicotinic acid in a dispersion (a dispersion medium: a mixed dispersion medium including water and isopropyl alcohol) containing 20 weight % of a fluorine-based ion conductor (Nation®). Specifically, 1 part by weight of nicotinic acid based on 100 parts by weight of the fluorine-based ion conductor was introduced into the dispersion, and stirring was performed at room temperature for 24 hours in order to completely dissolve the nicotinic acid, whereby the mixed solution was obtained. Subsequently, the mixed solution was cast onto a glass substrate and was then dried to manufacture a polymer electrolyte membrane having a thickness of about 15 μm.

Example 2

A polymer electrolyte membrane was manufactured using the same method as in Example 1 except that nicotinamide was used instead of nicotinic acid.

Example 3

A polymer electrolyte membrane was manufactured using the same method as in Example 1 except that ibuprofen was used instead of nicotinic acid.

Example 4

A nicotinic acid solution was obtained by introducing nicotinic acid into DMAc as a solvent and performing stirring at room temperature for 24 hours in order to completely dissolve the nicotinic acid. The content of the nicotinic acid in the solution was 0.15 weight %. Subsequently, a hydrocarbon-based ion conductor was dissolved in the solution to obtain a mixed solution. The amount of the hydrocarbon-based ion conductor used was 100 times that of the nicotinic acid (i.e., the content of the nicotinic acid in the mixed solution was 1 part by weight based on 100 parts by weight of the hydrocarbon-based ion conductor). Subsequently, the mixed solution was cast onto a glass substrate and was then dried to manufacture a polymer electrolyte membrane having a thickness of about 15 $\mu$m.

Example 5

A polymer electrolyte membrane was manufactured using the same method as in Example 1 except that 0.5 parts by weight of nicotinic acid based on 100 parts by weight of the fluorine-based ion conductor was dissolved in the dispersion.

Example 6

A polymer electrolyte membrane was manufactured using the same method as in Example 1 except that 2 parts by weight of nicotinic acid based on 100 parts by weight of the fluorine-based ion conductor was dissolved in the dispersion.

Example 7

A polymer electrolyte membrane was manufactured using the same method as in Example 1 except that 5 parts by weight of nicotinic acid based on 100 parts by weight of the fluorine-based ion conductor was dissolved in the dispersion.

Example 8

A polymer electrolyte membrane was manufactured using the same method as in Example 1 except that biotin was used instead of nicotinic acid.

Example 9

A polymer electrolyte membrane was manufactured using the same method as in Example 4 except that biotin was used instead of nicotinic acid.

Example 10

A polymer electrolyte membrane was manufactured using the same method as in Example 1 except that ascorbic acid was used instead of nicotinic acid.

Example 11

A polymer electrolyte membrane was manufactured using the same method as in Example 4 except that ascorbic acid was used instead of nicotinic acid.

Example 12

A polymer electrolyte membrane was manufactured using the same method as in Example 1 except that chitosan was used instead of nicotinic acid.

Example 13

A polymer electrolyte membrane was manufactured using the same method as in Example 4 except that chitosan was used instead of nicotinic acid.

Comparative Example 1

The dispersion of Example 1 was cast onto a glass substrate and then dried to manufacture a polymer electrolyte membrane having a thickness of about 15 $\mu$m without addition of nicotinic acid.

Comparative Example 2

A polymer electrolyte membrane was manufactured using the same method as in Example 1 except that a metal-based radical scavenger, $Ce(NO_3)_3 \cdot 6H_2O$, was used instead of nicotinic acid.

Comparative Example 3

A solution obtained by dissolving the hydrocarbon-based ion conductor of Example 4 in DMAc as a solvent having no nicotinic acid dissolved therein was cast onto a glass substrate and was then dried to manufacture a polymer electrolyte membrane having a thickness of about 15 $\mu$m.

Comparative Example 4

A polymer electrolyte membrane was manufactured using the same method as in Example 4 except that a metal-based radical scavenger, $Ce(NO_3)_3 \cdot 6H_2O$, was used instead of nicotinic acid.

Comparative Example 5

A polymer electrolyte membrane was manufactured using the same method as in Example 1 except that poly(4-vinyl pyridine) (PVP) was used instead of nicotinic acid.

Comparative Example 6

A polymer electrolyte membrane was manufactured using the same method as in Example 4 except that PVP was used instead of nicotinic acid.
Ionic conductivity and chemical durability of each of the polymer electrolyte membranes manufactured according to the above examples and comparative examples were measured as follows, and the results are shown in Table 1 below.

[In-plane ionic conductivity]

In-plane ionic conductivity of the polymer electrolyte membrane was measured using a magnetic suspension balance apparatus (Bell Japan Company) at 80°C and 50% RH.
Specifically, the alternating current potential difference occurring in a sample (10 mm x 30 mm) was measured while alternating current was applied to opposite surfaces of the sample under conditions of 80°C and 50% RH, whereby membrane resistance was obtained. Subsequently, in-plane ionic conductivity of the polymer electrolyte membrane was calculated using Equation 1 below, and the result is shown in Table 1 below.

$$* \text{ Equation 1: } \sigma = L/[R \times A]$$

(Here, $\sigma$ is in-plane ionic conductivity (S/cm), L is the distance between electrodes (cm), R is membrane resistance ($\Omega$), and A is the effective area (cm$^2$) of the membrane.)

[Chemical durability]

In order to evaluate chemical durability of the polymer electrolyte membrane, Fenton's test, which is used for chemically accelerated degradation evaluation, was performed. Specifically, a polymer electrolyte membrane sample (5 cm x 5 cm) was introduced into an aqueous solution containing 10 ppm of $FeSO_4$ and 30 weight% of $H_2O_2$, and stirring was performed at 80°C for 24 hours such that reaction occurred therebetween. In Fenton's test, $Fe^{2+}$ reacts as a catalyst, whereby $H_2O_2$ generates a hydroxyl radical, and this material degrades the polymer electrolyte membrane, whereby outflow of an electrolyte and thus weight loss is caused while degradation of the polymer electrolyte membrane is accelerated. Before and after the test, the weight of the polymer electrolyte membrane was measured, the weight loss rate of the polymer electrolyte membrane was calculated using Equation 2 below, and the result is shown in Table 1 below.

$$* \text{ Equation 2: } R_{WC} = [(W_1 - W_2)/W_1] \times 100$$

(Here, Rwc is the weight loss rate of the polymer electrolyte membrane (%), $W_1$ is the weight of the polymer electrolyte membrane before test, and $W_2$ is the weight of the polymer electrolyte membrane after test.)

[Table 1]

| | Ion conductor | | Radical scavenger | | In-plane ionic conductivity (S/cm) | Weight loss rate (%) |
|---|---|---|---|---|---|---|
| | Kind | Parts by weight | Kind | Parts by weight | | |
| Example 1 | Fluorine-based | 100 | Nicotinic acid | 1 | 0.150 | 9.23 |
| Example 2 | Fluorine-based | 100 | Nicotinamide | 1 | 0.148 | 9.72 |
| Example 3 | Fluorine-based | 100 | Ibuprofen | 1 | 0.146 | 10.34 |
| Example 4 | Hydrocarbon-based | 100 | Nicotinic acid | 1 | 0.167 | 30.1 |
| Example 5 | Fluorine-based | 100 | Nicotinic acid | 0.5 | 0.149 | 10.4 |
| Example 6 | Fluorine-based | 100 | Nicotinic acid | 2 | 0.148 | 8.17 |
| Example 7 | Fluorine-based | 100 | Nicotinic acid | 5 | 0.148 | 7.20 |
| Example 8 | Fluorine-based | 100 | Biotin | 1 | 0.146 | 10.53 |
| Example 9 | Hydrocarbon-based | 100 | Biotin | 1 | 0.164 | 29.17 |
| Example 10 | Fluorine-based | 100 | Ascorbic acid | 1 | 0.148 | 12.3 |
| Example 11 | Hydrocarbon-based | 100 | Ascorbic acid | 1 | 0.166 | 35.7 |
| Example 12 | Fluorine-based | 100 | Chitosan | 1 | 0.137 | 10.7 |
| Example 13 | Hydrocarbon-based | 100 | Chitosan | 1 | 0.148 | 29.7 |
| Comparative Example 1 | Fluorine-based | 100 | - | | 0.149 | 12.7 |
| Comparative Example 2 | Fluorine-based | 100 | Ce$(NO_3)_3 \cdot 6H_2O$ | 1 | 0.131 | 6.7 |
| Comparative Example 3 | Hydrocarbon-based | 100 | - | | 0.166 | 36.1 |
| Comparative Example 4 | Hydrocarbon-based | 100 | Ce$(NO_3)_3 \cdot 6H_2O$ | 1 | 0.146 | 24.0 |
| Comparative Example 5 | Fluorine-based | 100 | PVP | 1 | 0.147 | 13.1 |
| Comparative Example 6 | Hydrocarbon-based | 100 | PVP | 1 | 0.165 | 36.4 |

As can be seen from Table 1 above, the fluorine-based polymer electrolyte membrane including the metal-based radical scavenger (Ce$(NO_3)_3 \cdot 6H_2O$) (Comparative Example 2) exhibited significantly lower ionic conductivity than the fluorine-based polymer electrolyte membrane including no radical scavenger (Comparative Example 1). In addition, the hydrocarbon-based polymer electrolyte membrane including the metal-based radical scavenger (Ce(NO$_3$)$_3$·6H$_2$O) (Comparative Example 4) also exhibited significantly lower ionic conductivity than the hydrocarbon-based polymer electrolyte membrane including no radical scavenger (Comparative Example 3). It can be seen therefrom that the metal-based radical scavenger seriously reduces ionic conductivity of the polymer electrolyte membrane.

In contrast, ionic conductivity of each of the fluorine-based polymer electrolyte membranes each including the organic radical scavenger according to the present disclosure instead of the metal-based radical scavenger (Examples 1 to 3, 5 to 8, 10, and 12) is little different from or even higher than ionic conductivity of the fluorine-based polymer electrolyte membrane including no radical scavenger (Comparative Example 1). Similarly, ionic conductivity of each of the hydrocarbon-based polymer electrolyte membranes each including the organic radical scavenger according to the present disclosure instead of the metal-based radical scavenger (Examples 4, 9, 11, and 13) is little different from or even slightly higher than ionic conductivity of the hydrocarbon-based polymer electrolyte membrane including no radical scavenger (Comparative Example 3). It can be seen therefrom that the organic radical scavenger according to the present disclosure does not substantially reduce ionic conductivity of the polymer electrolyte membrane or reduces ionic conductivity of the polymer electrolyte membrane less than the metal-based radical scavenger.

As can be seen from Examples 12 and 13, however, chitosan reduces ionic conductivity of the polymer electrolyte membrane less than the conventional metal-based radical scavenger but reduces ionic conductivity of the polymer electrolyte membrane more than the organic radical scavengers of the other embodiments (i.e. nicotinic acid, nicotinamide, ibuprofen, biotin, and ascorbic acid). Consequently, chitosan may be less preferable than the other organic radical scavengers in terms of ionic conductivity of the polymer electrolyte membrane.

In addition, the weight loss of each of the fluorine-based polymer electrolyte membranes including the organic radical scavengers according to the present disclosure (Examples 1 to 3, 5 to 8, 10, and 12) due to the chemical durability test was less than weight loss of the fluorine-based polymer electrolyte membrane including no radical scavenger (Comparative Example 1). Similarly, weight loss of each of the hydrocarbon-based polymer electrolyte membranes each including the organic radical scavenger according to the present disclosure (Examples 4, 9, 11, and 13) due to the chemical durability test was less than weight loss of the hydrocarbon-based polymer electrolyte membrane including no radical scavenger (Comparative Example 3). It can be seen therefrom that the organic radical scavengers according to the present disclosure improve chemical durability of the polymer electrolyte membrane.

As can be seen from Examples 10 and 11, however, the polymer electrolyte membrane including ascorbic acid as the radical scavenger exhibited more improved chemical durability than the polymer electrolyte membrane including no radical scavenger but exhibited greater weight loss than the polymer electrolyte membranes of the other embodiments (i.e. the polymer electrolyte membranes each including nicotinic acid, nicotinamide, ibuprofen, biotin, or chitosan as the radical scavenger) (i.e. the polymer electrolyte membrane including ascorbic acid as the radical scavenger exhibited relatively low chemical durability). Consequently, ascorbic acid may be less preferable than the other organic radical scavengers in terms of improvement in chemical durability of the polymer electrolyte membrane.

Meanwhile, as can be seen from Comparative Examples 5 and 6, PVP that does not have the functional group according to the present disclosure cannot perform the function of the radical scavenger, i.e. improvement in chemical durability of the polymer electrolyte membrane, at all.

As a result, it can be seen that each of the organic radical scavengers of the above examples is capable of remarkably improving chemical durability of the polymer electrolyte membrane while not substantially causing reduction in ionic conductivity of the polymer electrolyte membrane, which is a shortcoming of the conventional metal-based radical scavenger. In particular, it can be seen that the organic radical scavengers of Examples 1 to 9 (i.e. nicotinic acid, nicotinamide, ibuprofen, and biotin) are more preferable in terms of both ionic conductivity and chemical durability of the polymer electrolyte membrane.

## Claims

1. A polymer electrolyte membrane comprising an electrolyte composition,
   wherein the electrolyte composition comprises:

   an ion conductor; and
   a radical scavenger, and
   wherein the radical scavenger comprises an organic cyclic compound having at least one functional group selected from a group consisting of a hydroxyl group (-OH), an amine group (-NH$_2$), a carboxyl group (-COOH), and an amide group (-CONH$_2$).

2. The polymer electrolyte membrane according to claim 1, wherein the organic cyclic compound is a heterocyclic compound comprising nitrogen as a heteroelement.

3. The polymer electrolyte membrane according to claim 2, wherein the radical scavenger comprises substituted or unsubstituted nicotinic acid or substituted or unsubstituted nicotinamide.

4. The polymer electrolyte membrane according to claim 1, wherein the radical scavenger comprises at least one organic cyclic compound selected from a group consisting of substituted or unsubstituted nicotinic acid, substituted or unsubstituted nicotinamide, substituted or unsubstituted ibuprofen, and substituted or unsubstituted biotin.

5. The polymer electrolyte membrane according to claim 1, wherein the organic cyclic compound is included in the polymer electrolyte membrane in an amount of 0.1 to 5 parts by weight based on 100 parts by weight of the ion conductor.

6. The polymer electrolyte membrane according to claim 1, wherein the ion conductor has at least one ion exchange group selected from a group consisting of a sulfonic acid group, a carboxyl group, a boronic acid group, a phosphoric acid group, an imide group, a sulfone imide group, a sulfone amide group, and a sulfonic acid fluoride group.

7. The polymer electrolyte membrane according to claim 6, wherein the ion conductor is a fluorine-based ion conductor or a hydrocarbon-based ion conductor.

8. The polymer electrolyte membrane according to claim 1, wherein

   the polymer electrolyte membrane further comprises a porous support having a plurality of pores, and
   the pores are filled with the electrolyte composition.

9. The polymer electrolyte membrane according to claim 8, wherein the porous support is an expanded film or a nonwoven fibrous web.

10. The polymer electrolyte membrane according to claim 8, wherein a ratio of an apparent volume of the porous support to a total volume of the polymer electrolyte membrane is 5 to 90%.

11. A method for manufacturing a polymer electrolyte membrane, the method comprising:

    preparing a mixed solution comprising an ion conductor and a radical scavenger; and
    forming a polymer electrolyte membrane using the mixed solution,
    wherein the radical scavenger comprises an organic cyclic compound having at least one functional group selected from a group consisting of a hydroxyl group (-OH), an amine group ($-NH_2$), a carboxyl group (-COOH), and an amide group ($-CONH_2$).

12. The method according to claim 11, wherein the preparing the mixed solution comprises:

    preparing a dispersion having the ion conductor dispersed therein; and
    dissolving the radical scavenger in the dispersion.

13. The method according to claim 12, wherein the ion conductor is a fluorine-based ion conductor.

14. The method according to claim 11, wherein preparing the mixed solution comprises:

    dissolving the radical scavenger in a solvent to obtain a first solution; and
    dissolving the ion conductor in the first solution to obtain a second solution.

15. The method according to claim 14, wherein the ion conductor is a hydrocarbon-based ion conductor.

16. The method according to claim 11, wherein the organic cyclic compound is a heterocyclic compound comprising nitrogen as a heteroelement.

17. The method according to claim 16, wherein the radical scavenger comprises substituted or unsubstituted nicotinic acid or substituted or unsubstituted nicotinamide.

18. The method according to claim 11, wherein the radical scavenger comprises at least one organic cyclic compound selected from a group consisting of substituted or unsubstituted nicotinic acid, substituted or unsubstituted nicotinamide, substituted or unsubstituted ibuprofen, and substituted or unsubstituted biotin.

19. The method according to claim 11, wherein the organic cyclic compound is included in the mixed solution in an amount of 0.1 to 5 parts by weight based on 100 parts by weight of the ion conductor.

20. The method according to claim 11, wherein forming the polymer electrolyte membrane using the mixed solution comprises:

preparing a porous support;
impregnating the porous support with the mixed solution; and
drying the porous support impregnated with the mixed solution.

21. An electrochemical device comprising:

an anode;
a cathode; and
the polymer electrolyte membrane according to claim 1 disposed between the anode and the cathode.

## INTERNATIONAL SEARCH REPORT

| International application No. |
| --- |
| **PCT/KR2021/015985** |

| A. | CLASSIFICATION OF SUBJECT MATTER |
| --- | --- |
| | **H01M 8/1051**(2016.01)i; **H01M 8/1058**(2016.01)i; **H01M 8/1081**(2016.01)i; **H01M 8/18**(2006.01)i; **H01M 8/1018**(2016.01)i |

According to International Patent Classification (IPC) or to both national classification and IPC

| B. | FIELDS SEARCHED |
| --- | --- |

Minimum documentation searched (classification system followed by classification symbols)

H01M 8/1051(2016.01); B01D 53/22(2006.01); H01L 31/04(2006.01); H01M 10/0525(2010.01); H01M 10/0567(2010.01); H01M 14/00(2006.01); H01M 8/10(2006.01); H01M 8/1004(2016.01); H01M 8/1069(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해질막(electrolyte membrane), 이온전도체(ion conductor), 라디칼 스캐빈저 (radical scavenger), 유기 고리 화합물(organic cyclic compound), 니코틴산(nicotinic acid), 니코틴아미드(nicotinamide)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2016-0142289 A (TORAY INDUSTRIES, INC.) 12 December 2016 (2016-12-12)<br>See paragraphs [0003], [0072]-[0077], [0106], [0113], [0131]-[0136], [0193] and [0204]-[0206]; and claims 1 and 12. | 1,2,5-7,11-16,19,21 |
| Y | | 3,4,8-10,17,18,20 |
| Y | OGATA, S. et al. Radical Scavenging Activities of Niacin-Related Compounds. Biosci. Biotechnol. Biochem. 2002, vol. 66, no. 3, pp. 641-645.<br>See abstract; page 642; and figure 1. | 3,4,17,18 |
| Y | KR 10-2015-0135116 A (DANKOOK UNIVERSITY CHEONAN CAMPUS INDUSTRY ACADEMIC COOPERATION FOUNDATION) 02 December 2015 (2015-12-02)<br>See paragraphs [0058]-[0073] and [0107]; and claims 1-6. | 8-10,20 |
| A | JP 2011-108628 A (IND TECHNOL RES INST.) 02 June 2011 (2011-06-02)<br>See entire document. | 1-21 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 February 2022** | **21 February 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/015985** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2012-0090113 A (SAMSUNG ELECTRONICS CO., LTD.) 17 August 2012 (2012-08-17) See entire document. | 1-21 |

Form PCT/ISA/210 (second sheet) (July 2019)

**INTERNATIONAL SEARCH REPORT**
Information on patent family members

International application No.

**PCT/KR2021/015985**

| Patent document cited in search report | | | Publication date (day/month/year) | Patent family member(s) | | | Publication date (day/month/year) |
|---|---|---|---|---|---|---|---|
| KR | 10-2016-0142289 | A | 12 December 2016 | CA | 2944439 | A1 | 15 October 2015 |
| | | | | CA | 2944439 | C | 26 October 2021 |
| | | | | CN | 106165175 | A | 23 November 2016 |
| | | | | CN | 106165175 | B | 08 November 2019 |
| | | | | EP | 3131145 | A1 | 15 February 2017 |
| | | | | EP | 3131145 | B1 | 05 September 2018 |
| | | | | JP | 6341204 | B2 | 13 June 2018 |
| | | | | TW | 201603383 | A | 16 January 2016 |
| | | | | TW | I643394 | B | 01 December 2018 |
| | | | | US | 10103401 | B2 | 16 October 2018 |
| | | | | US | 2017-0125832 | A1 | 04 May 2017 |
| | | | | WO | 2015-156228 | A1 | 15 October 2015 |
| KR | 10-2015-0135116 | A | 02 December 2015 | None | | | |
| JP | 2011-108628 | A | 02 June 2011 | JP | 5282073 | B2 | 04 September 2013 |
| | | | | TW | 201117454 | A | 16 May 2011 |
| | | | | TW | I449236 | B | 11 August 2014 |
| | | | | US | 2011-0114167 | A1 | 19 May 2011 |
| | | | | US | 8287753 | B2 | 16 October 2012 |
| KR | 10-2012-0090113 | A | 17 August 2012 | EP | 2472662 | A1 | 04 July 2012 |
| | | | | EP | 2472662 | B1 | 18 June 2014 |
| | | | | US | 2012-0171563 | A1 | 05 July 2012 |
| | | | | US | 9118086 | B2 | 25 August 2015 |

Form PCT/ISA/210 (patent family annex) (July 2019)